# EUROPÄISCHE PATENTSCHRIFT

(11) **EP 3 495 683 B1**
(45) Veröffentlichungstag und Bekanntmachung des Hinweises auf die Patenterteilung: **11.11.2020**
(21) Anmeldenummer: 18195467.8
(22) Anmeldetag: 19.09.2018
(51) Int. Cl.: F16D 65/00

(54) **BREMSTRÄGER FÜR EINE SCHEIBENBREMSE**
BRAKE CARRIER FOR A BRAKE DISC
SUPPORT DE FREIN POUR UN FREIN À DISQUE

(30) Priorität: 08.12.2017 DE 102017011338
(43) Veröffentlichungstag der Anmeldung: 12.06.2019
(73) Patentinhaber: WABCO Europe BVBA, 1170 Brüssel (BE)
(72) Erfinder: SCHERER, Vitalij, 69181 Leimen (DE)
(74) Vertreter: Copi, Joachim

(56) Entgegenhaltungen:
- WO-A1-2015/050638
- WO-A1-2017/060513
- DE-A1- 4 036 272
- US-B1- 6 186 289

## Beschreibung

Die Erfindung betrifft einen Bremsträger zur Aufnahme von Bremsbelägen für eine Scheibenbremse mit einer Bremsscheibe, wobei der Bremsträger eine zuspannseitige Brückenstrebe an einer Zuspannseite der Scheibenbremse und eine parallel, bezogen auf eine Bremsträgerachse, angeordnete reaktionsseitige Brückenstrebe auf einer Reaktionsseite der Scheibenbremse aufweist. Die zuspannseitige Brückenstrebe und die reaktionsseitige Brückenstrebe sind an einem ersten Ende des Bremsträgers über einen ersten Verbindungssteg miteinander verbunden. Zudem sind die zuspannseitige Brückenstrebe und die reaktionsseitige Brückenstrebe an einem zweiten Ende des Bremsträgers über einen zweiten Verbindungssteg miteinander verbunden. Der Bremsträger weist eine mit Bremsträgerhörnern versehene Bremsbelagaufnahmeseite und eine zur Fahrbahn ausgerichtete Bremsträgerseite auf. Die zur Fahrbahn ausgerichtete Bremsträgerseite wird nachfolgend als Bremsträgerunterseite bezeichnet.

Bei aktuellen Bremsträgern können zum Beispiel Regen, Schnee, Salz oder auch andere Einflüsse abhängig von der Bremsposition leicht zwischen den Reibflächen der Bremsscheibe und den Bremsbelägen gelangen. Somit kann ein Reibwert negativ beeinflusst und auch ein Differenzverschleiß erzeugt oder verstärkt werden. Als Reibwert ist der Wert zu verstehen, der bei einem Kontakt der Bremsbeläge mit der Bremsscheibe auftritt. Als Differenzverschleiß ist der Verschleiß zwischen den Bremsbelägen und der Bremsscheibe zu verstehen. So zeigt die DE 43 43 737 A1 einen einstückig umlaufenden Bremsträger mit vier Bremsträgerhörnern, die zwei u-förmige Schächte zur Aufnahme von Bremsbelägen bilden. Die Mittelstreben des Bremsträgers verlaufen geradlinig. Eine zusätzliche Ausgestaltung des Bremsträgers zur Abführung von Einflüssen wie Regen, Schnee, Sand, Salz etc. ist nicht vorhanden.

Einen Bremsträger mit einer speziellen Ausgestaltungsform zeigt beispielsweise die DE 10 2016 104 967 A1. Dabei weist der Bremsträger zwei bogenförmige Abschnitte auf, wobei eine zur Fahrbahn ausgerichtete Unterseite eines bogenförmigen Abschnitts oder zwei zur Fahrbahn ausgerichtete Unterseiten der bogenförmigen Abschnitte in einem Winkel von 1° bis 20° gekippt sein können. Damit werden Spannungen innerhalb des Bremsträgers abgebaut. Die gekippte Anordnung ist nur an den spannungskritischen Stellen des Bremsträgers vorhanden. Ein wirksamer Schutz gegen Einflüsse, wie Schnee, Schmutz oder Sand ist nicht gegeben, da die zur Fahrbahn ausgerichteten Unterseiten der bogenförmigen Abschnitte nicht die Rippenabschnitte des Bremsträgers mit einschließen.

Aufgabe der Erfindung ist es, einen Bremsträger bereit zu stellen, der den Reibwert zwischen Bremsscheibe und Bremsbelag verbessert und den Differenzverschleiß verhindert oder zumindest minimiert.

Die Aufgabe wird dadurch gelöst, dass die zuspannseitige Brückenstrebe eine erste Schräge an der zur Fahrbahn ausgerichteten Bremsträgerunterseite des Bremsträgers aufweist und die erste Schräge der zuspannseitigen Brückenstrebe, ausgehend von einem ersten Bremsträgerhorn bis zu einem zweiten Bremsträgerhorn, durchgängig angeordnet ist und die reaktionsseitige Brückenstrebe eine zweite Schräge an der Brenmsträgerunterseite aufweist und die zweite Schräge der reaktionsseitigen Brückenstrebe, ausgehend von einem dritten Bremsträgerhorn bis zu einem vierten Bremsträgerhorn, durchgängig angeordnet ist.

Da der Bremsträger zur Fahrbahnseite offen ausgestaltet ist, lagern sich während des Fahrbetriebs u.a. Schmutz, Wasser, Schnee, Salz, Bremsabrieb oder Sand in dem Innenraum des Bremsträgers zwischen der Bremsscheibe und den Bremsbelägen ab. Der Schmutz, Regen, Salz, Bremsabrieb oder Sand wird in der weiteren Beschreibung als Ablagerung bezeichnet, wobei die aufgezählten Ablagerungen nicht abschließend sind. Die Schrägen der Bremsträgerunterseite führen die Ablagerungen aus dem Innenraum des Bremsträgers gezielt nach außen ab. Damit wird eine Ansammlung von Ablagerungen in dem Innenraum des Bremsträgers vermieden und der Reibwert wird nicht negativ von den Ablagerungen beeinflusst. Auch ein Festsetzen der Ablagerungen in dem Innenraum des Bremsträgers wird damit entgegen gewirkt, sodass ein Differenzverschleiß vermieden oder zumindest minimiert wird.

In einer weiteren Ausgestaltung ist die Neigung der ersten Schräge der zuspannseitigen Brückenstrebe, bezogen in Richtung der Bremsträgerunterseite der Bremsscheibe, und die Neigung der zweiten Schräge der reaktionsseitigen Brückenstrebe, bezogen in Richtung der Bremsträgerunterseite der Bremsscheibe, steigend.
Die erste Schräge der zuspannseitigen Brückenstrebe und die erste Schräge der reaktionsseitigen Brückenstrebe wirken als Trichter der sich in Richtung der Fahrbahn verkleinert. Ablagerungen können damit nur sehr schlecht in den Innenraum des Bremsträgers gelangen und erleichtern zudem das gezielte Abführen der Ablagerungen aus dem Bremsträger.

Darüber hinaus weist in einer weiteren vorteilhaften Ausgestaltung der Bremsträger eine gedachte erste Ebene "E" und eine gedachte zweite Ebene "E2" auf. Die erste Schräge der zuspannseitigen Brückenstrebe ist bezogen auf die gedachte erste Ebene "E" in einem Winkel (a) gekippt und die zweite Schräge der reaktionsseitigen Brückenstrebe ist bezogen auf die zweite Ebene "E2" in einem Winkel (β) gekippt.

Es hat sich zudem gezeigt, dass vorteilhaft die erste Schräge der zuspannseitigen Brückenstrebe in einem Winkel (α) zwischen 1,5° und 15° und die zweite Schräge der reaktionsseitigen Brückenstrebe in einem Winkel (β) zwischen 1,5° und 10° gekippt sind, wodurch ein besonders kontrolliertes und gezieltes Abführen der Ablagerungen möglich ist. Bevorzugt ist die erste Schräge der zuspannseitigen Brückenstrebe in einem Winkel (α) von 5° und die zweite Schräge der reaktionsseitigen Brückenstrebe in einem Winkel (β) von 3° gekippt.

In einer weiteren Ausführungsform weist die erste Schräge der zuspannseitigen Brückenstrebe parallel der Bremsträgerachse eine Nase und/oder die zweite Schräge der reaktionsseitigen Brückenstrebe parallel der Bremsträgerachse eine Nase auf. Mittels der zusätzlichen Nase der zuspannseitigen Brückenstrebe und/oder der Nase der reaktionsseitigen Brückenstrebe können die Ablagerungen noch besser gezielt abgehalten und aus dem Innenraum des Bremsträgers gezielt abgeführt werden. Auch ein Eindringen von Ablagerungen in den Bremssattel wird erschwert, wodurch der Reibwert zwischen der Bremsscheibe und den Bremsbelägen verbessert wird.

Die Nase der zuspannseitigen Brückenstrebe und/oder die Nase der reaktionsseitigen Brückenstrebe sind vorteilhaft in einer weiteren Ausführungsform einstückig mit dem Bremsträger ausgebildet. Das heißt, dass der Bremsträger mit der Nase der zuspannseitigen Brückenstrebe und/oder der Nase der reaktionsseitigen Brückenstrebe als ein Bauteil gegossen werden. Zusätzliche Arbeitsschritte sind nicht notwendig.

Weiterhin ist es auch denkbar, dass die erste Schräge der zuspannseitigen Brückenstrebe und die zweite Schräge der reaktionsseitigen Brückenstrebe zwischen dem ersten Verbindungssteg und dem zweiten Verbindungssteg durchgängig sind. Aufgrund der durchgängigen Schrägen wird eine ungewollte Reibung zwischen der Bremsscheibe und den Bremsbelägen auf ein Minimum reduziert oder ganz verhindert. Zudem ist der Innenraum des Bremsträgers maximal gegen ein Festsetzen von Ablagerungen geschützt, sodass der Differenzverschleiß weitestgehend reduziert wird.

In einer weiteren vorteilhaften Ausgestaltung ist die erste Schräge der zuspannseitigen Brückenstrebe, ausgehend von einem dritten Bremsträgerhorn bis zu einem vierten Bremsträgerhorn, durchgängig angeordnet und die zweite Schräge der reaktionsseitigen Brückenstrebe ist zwischen dem ersten Verbindungssteg und dem zweiten Verbindungssteg durchgängig angeordnet. Nach einer weiteren Ausführungsform ist die erste Schräge der zuspannseitigen Brückenstrebe zwischen dem ersten Verbindungssteg und dem zweiten Verbindungssteg durchgängig angeordnet. Zudem ist die zweite Schräge der reaktionsseitigen Brückenstrebe, ausgehend von einem ersten Bremsträgerhorn bis zu einem zweiten Bremsträgerhorn, durchgängig angeordnet. Es hat sich gezeigt, dass je nach Einsatzort eines Fahrzeugs nur die zuspannseitige Brückenstrebe oder die reaktionsseitige Brückenstrebe des Bremsträgers zwischen dem ersten Verbindungssteg und dem zweiten Verbindungssteg gegen ein Festsetzen von Ablagerungen vorteilhaft durchgängig angeordnet sein muss. Der größte Anteil an Ablagerungen setzt sich zwischen den Bremsbelägen und der Bremsscheibe ab. Für Fahrzeuge die überwiegend auf befestigten Fahrbahnen fahren, sind eine durchgehende Anordnung der ersten Schräge an der zuspannseitigen Brückenstrebe des Bremsträgers oder an der reaktionsseitigen Brückenstrebe zwischen dem ersten Verbindungssteg und dem zweiten Verbindungssteg des Bremsträgers ausreichend.

Nachfolgend werden ausgewählte Ausführungsbeispiele der Erfindung anhand der beigefügten Figuren erläutert.

Es zeigt:
Fig. 1 eine Scheibenbremse mit einem Bremsträger im eingebauten Zustand von Bremsträgerunterseite,
Fig. 2 einen Bremsträger nach Fig. 1 im Querschnitt,
Fig. 2a einen Bremsträger nach Fig. 1 in einer gedrehten Seitenansicht,
Fig. 2b einen Bremsträger nach Fig. 1 im ausgebauten Zustand von der Bremsträgerunterseite,
Fig. 3 einen Bremsträger nach Fig. 1 von der Bremsträgerunterseite, bei dem die erste Schräge der zuspannseitigen Brückenstrebe und die zweite Schräge der reaktionsseitigen Brückenstrebe von einem ersten Verbindungssteg des Bremsträgers bis zu einem zweiten Verbindungssteg des Bremsträgers durchgängig angeordnet sind,
Fig. 4 einen Bremsträger im Querschnitt, bei dem die erste Schräge der zuspannseitigen Brückenstrebe und die zweite Schräge der reaktionsseitigen Brückenstrebe eine Nase aufweisen,
Fig. 5 einen Bremsträger nach Fig. 4 von der Bremsträgerunterseite,
Fig. 6 einen Bremsträger nach Fig. 4 in einer seitlich gedrehten Perspektive,
Fig. 7 einen Bremsträger nach Fig. 4 von der Bremsträgerunterseite, bei dem die Nasen der ersten Schräge der zuspannseitigen Brückenstrebe und die Nase der zweiten Schräge der reaktionsseitigen Brückenstrebe von einem ersten Verbindungssteg des Bremsträgers bis zu einem zweiten Verbindungssteg des Bremsträgers durchgängig angeordnet sind,
Fig. 8 einen Bremsträger von der Bremsträgerunterseite, wobei die reaktionsseitige Brückenstrebe von einem ersten Verbindungssteg des Bremsträgers bis zu einem zweiten Verbindungssteg des Bremsträgers durchgängig angeordnet und die zuspannseitige Brückenstrebe von einem ersten Bremsträgerhorn bis zu einem zweiten Bremsträgerhorn durchgängig angeordnet ist,
Fig. 9 einen Bremsträger von der Bremsträgerunterseite, wobei die zuspannseitige Brückenstrebe von einem ersten Verbindungssteg des Bremsträgers bis zu einem zweiten Verbindungssteg des Bremsträgers durchgängig angeordnet und die reaktionsseitige Brückenstrebe von einem dritten Bremsträgerhorn bis zu einem vierten Bremsträgerhorn durchgängig angeordnet ist,
Fig. 10 einen Bremsträger von der Bremsträgerunterseite, bei dem die zuspannseitige Brückenstrebe und die reaktionsseitige Brückenstrebe eine Schräge aufweisen und die reaktionsseitige Brückenstrebe zusätzlich eine Nase aufweist,
Fig. 11 einen Bremsträger von der Bremsträgerunterseite, bei dem die zuspannseitigen Brückenstrebe und die reaktionsseitige Brückenstrebe eine Schräge aufweisen und die zuspannseitige Brückenstrebe zusätzlich eine Nase aufweist.

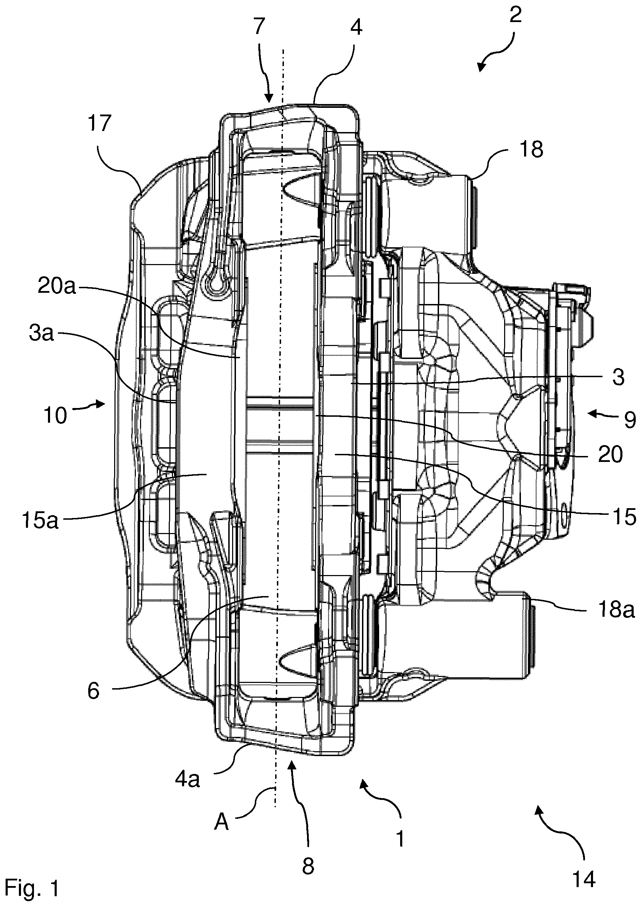

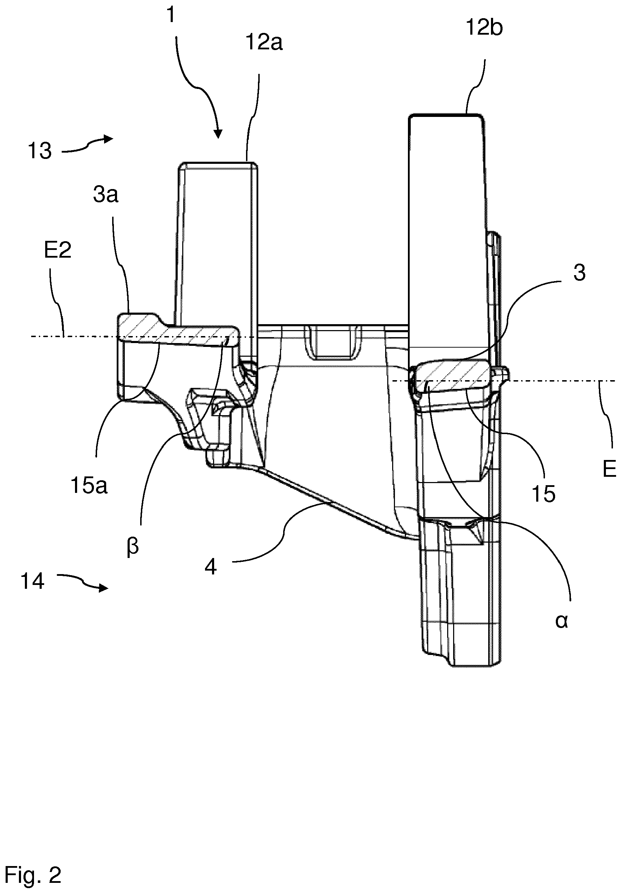

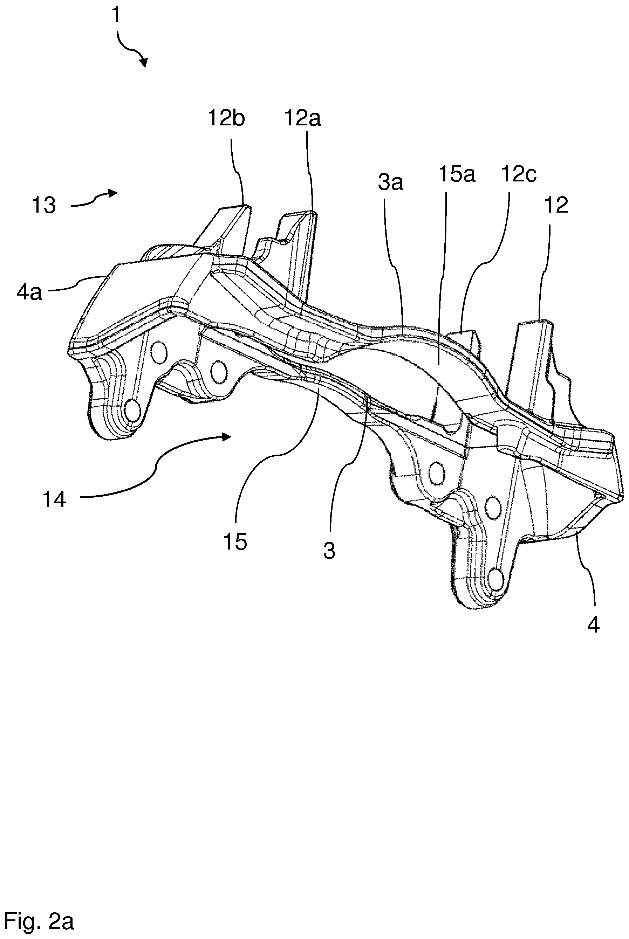

Fig. 1 zeigt eine Scheibenbremse 2 mit einer Bremsscheibe 6 und zwei Bremsbelägen 20, 20a, zum Abbremsen des Fahrzeugs während der Fahrt, von der Bremsträgerunterseite 14. Die Scheibenbremse 2 weist einen Gleitsattel 17 auf, der über zwei Schiebebolzen 18, 18a gleitend auf einem Bremsträger 1 gelagert ist. Die Bremsscheibe 6 ist axial zu einer Bremsträgerachse A in dem Bremsträger 1 angeordnet. Der Bremsträger 1 weist auf einer Zuspannseite 9 eine zuspannseitige Brückenstrebe 3 und parallel auf einer Reaktionsseite 10 eine reaktionsseitige Brückenstrebe 3a auf. Ein erster Verbindungssteg 4 verbindet die zuspannseitige Brückenstrebe 3 und die reaktionsseitige Brückenstrebe 3a an einem ersten Ende 7 des Bremsträgers 1. An einem gegenüberliegenden zweiten Ende 8 des Bremsträgers 1 verbindet ein zweiter Verbindungssteg 4a die zuspannseitige Brückenstrebe 3 und die reaktionsseitige Brückenstrebe 3a des Bremsträgers 1. Die zuspannseitige Brückenstrebe 3 und die reaktionsseitige Brückenstrebe 3a weisen an der Bremsträgerunterseite 14 je eine Schräge 15, 15a auf. Die erste Schräge 15 der zuspannseitigen Brückenstrebe 3 erstreckt sich entlang von einem dritten Bremsträgerhorn 12b bis zu einem vierten Bremsträgerhorn 12c (Fig. 2a). Die zweite Schräge 15a der reaktionsseitigen Brückenstrebe 3a erstreckt sich entlang von einem ersten Bremsträgerhorn 12 bis zu einem zweiten Bremsträgerhorn 12a (Fig. 2a). Ablagerungen werden damit während der Fahrt oder im Stillstand des Fahrzeugs direkt an der ersten Schräge 15 der zuspannseitigen Brückenstrebe 3 und an der zweiten Schräge 15a der reaktionsseitigen Brückenstrebe 3a abgewiesen und von der Bremsscheibe 6 weg nach außen abtransportiert. Von der Scheibenbremse 2 selbst erzeugte Ablagerungen wie Bremsstaub oder auch andere Ablagerungen können sich nicht oder nur noch bedingt zwischen der Bremsscheibe 6 und den Bremsbelägen 20, 20a absetzen. Das verhindert oder minimiert eine zusätzliche Reibung zwischen der Bremsscheibe 6 und den Bremsbelägen 20, 20a. Der Abbremsvorgang des Fahrzeugs von der Fahrt bis zum Stillstand wird durch den verbesserten Reibwert zwischen der Bremsscheibe 6 und den Bremsbelägen 20, 20a verkürzt und das Fahrzeug kommt schneller zum Stillstand. Auch der Differenzverschleiß zwischen den Bremsbelägen 20, 20a und der Bremsscheibe 2 wird reduziert. Das heißt, dass Ablagerungen ein Lüftspiel, also der Abstand zwischen der Bremsscheibe 2 und den Bremsbelägen 20, 20a, nicht oder nicht vollständig zusetzen, sodass im ungebremsten Zustand des Fahrzeugs das Lüftspiel erhalten bleibt. Ein zusätzlicher Verschleiß der Bremsbeläge 20, 20a im ungebremsten Zustand des Fahrzeugs wird vermieden oder zumindest reduziert.

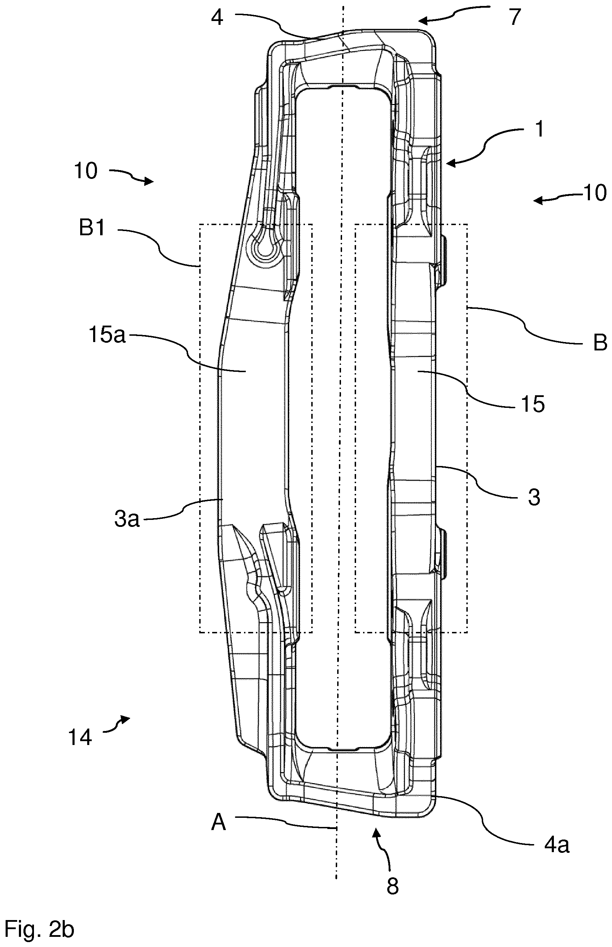

Wie der Bremsträger 1 nach Fig. 1 im Querschnitt aussieht, zeigt Fig. 2. Der Bremsträger 1 weist eine Bremsbelagaufnahmeseite 13 und eine Bremsbelag 20, 20a abgewandte Seite 14 auf. Dabei ist deutlich die erste Schräge 15 der zuspannseitigen Brückenstrebe 3 und die zweite Schräge 15a der reaktionsseitigen Brückenstrebe 3a sichtbar. Die erste Schräge 15 der zuspannseitigen Brückenstrebe 3 ist, bezogen auf eine gedachte erste Ebene E in Richtung der Bremsscheibe 6 (s. Fig. 1) des Bremsträgers 1, in einem Winkel a von 5° gekippt. Auf der gegenüberliegenden Seite ist parallel die reaktionsseitge Brückenstrebe 3a, bezogen auf eine gedachte zweite Ebene E2 in Richtung der Bremsscheibe 6 (s. Fig. 1) des Bremsträgers 1, in einem Winkel β von 3° gekippt.

Fig.2a zeigt den Bremsträger nach Fig. 1 und Fig. 2 aus einer seitlich gedrehten Ansicht. In Fig. 2a wird insbesondere die Anordnung der ersten Schräge 15 der zuspannseitigen Brückenstrebe 3 und die zweite Schräge 15a der reaktionsseitigen Brückenstrebe 3a an der Bremsbelag 20, 20a abgewandten Seite 14 des Bremsträgers 1 sichtbar. Weiterhin sind an der Bremsbelagaufnahmeseite 13 die Bremsträgerhörner 12, 12a, 12b, 12c zur Aufnahme der Bremsbeläge 20, 20a (vgl. Fig. 1) des Bremsträgers 1 erkennbar.

Fig. 2b zeigt den Bremsträger 1 nach Fig. 1 bis Fig. 2a von der Bremsträgerunterseite 14, jedoch im ausgebauten Zustand. Zusätzlich sind an der zuspannseitigen Brückenstrebe 3 ein gedachter Bereich B der ersten Schräge 15 und an der reaktionsseitgen Brückenstrebe 3a ein gedachter Bereich B1 der zweiten Schräge 15a eingezeichnet. Die Bereiche B, B1 verdeutlichen die Anordnung der Schrägen 15, 15a an den Brückenstreben 3, 3a. Die erste Schräge 15 der zuspannseitigen Brückenstrebe 3 erstreckt sich entlang von einem dritten Bremsträgerhorn 12b bis zu einem vierten Bremsträgerhorn 12c. Die zweite Schräge 15a der reaktionsseitigen Brückenstrebe 3a erstreckt sich entlang von einem ersten Bremsträgerhorn 12 bis zu einem zweiten Bremsträgerhorn 12a.

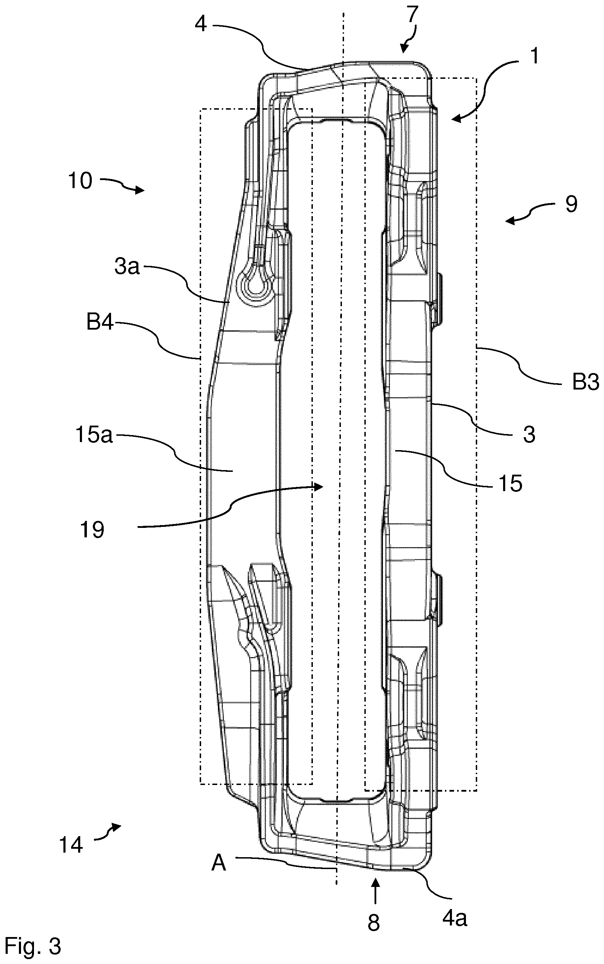

Fig. 3 zeigt einen Bremsträger 1 nach Fig. 1 bis Fig. 2b, bei der die erste Schräge 15 der zuspannseitigen Brückenstrebe 3 und die zweite Schräge 15a der reaktionsseitigen Brückenstrebe 3a zwischen dem ersten Verbindungssteg 4 und dem zweiten Verbindungssteg 4a angeordnet sind. Die Anordnung der ersten Schräge 15 der zuspannseitigen Brückenstrebe 3 ist zur Verdeutlichung durch einen gedachten Bereich B3 markiert. Die Anordnung der zweiten Schräge 15a der reaktionsseitigen Brückenstrebe 3 ist dagegen zur Verdeutlichung mit einem gedachten Bereich B4 markiert. Die Schrägen 15, 15a sind an der Bremsträgerunterseite Seite 14 der Brückenstreben 3, 3a des Bremsträgers 1 angeordnet und erschweren das Eindringen von Ablagerungen in einem Innenraum 19 des Bremsträgers 1. Gegenüber einer Anordnung der ersten Schräge 15 der zuspannseitigen Brückenstrebe 3 von einem dritten Bremsträgerhorn 12b bis zu einem vierten Bremsträgerhorn 12c und der Anordnung der zweiten Schräge 15a der reaktionsseitigen Brückenstrebe 3a von einem ersten Bremsträgerhorn 12 bis zu einem zweiten Bremsträgerhorn 12a verbessert sich zusätzlich der Reibwert und es reduziert sich der Differenzverschleiß zwischen der Bremsscheibe 6 und den Bremsbelägen 20, 20a (vgl. Fig. 1). Die erste Schräge 15 der zuspannseitigen Brückenstrebe 3 ist nämlich parallel zur Bremsträgerachse A über die gesamte Länge der zuspannseitigen Brückenstrebe 3 angeordnet. Zudem ist die zweite Schräge 15a der reaktionsseitigen Brückenstrebe 3a parallel zur Bremsträgerachse A über die gesamte Länge der reaktionsseitigen Brückenstrebe 3a angeordnet.

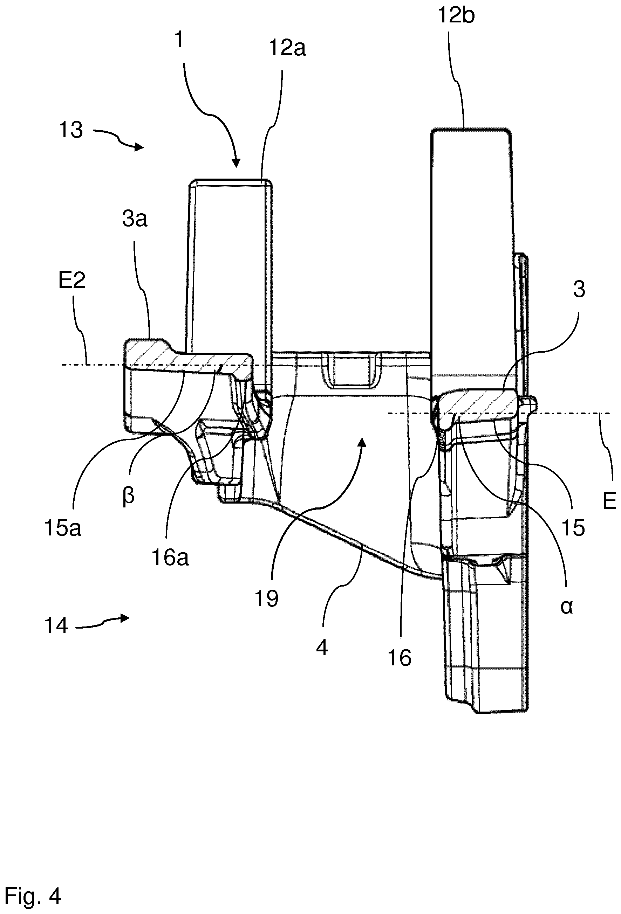

Eine dritte Variante des Bremsträgers 1 zeigt Fig. 4. Fig. 4 zeigt den Bremsträger 1 mit einem ersten Verbindungssteg 4 im Querschnitt. Die erste Schräge 15 der zuspannseitigen Brückenstrebe 3 ist, bezogen auf eine gedachte erste Ebene E in Richtung der Bremsscheibe 6 (s. Fig. 1) des Bremsträgers 1, in einem Winkel α von 5° gekippt. Auf der gegenüberliegenden Seite ist parallel die reaktionsseitge Brückenstrebe 3a, bezogen auf eine gedachte zweite Ebene E2 in Richtung der Bremsscheibe 6 (s. Fig. 1) des Bremsträgers 1, in einem Winkel β von 3° gekippt. Zusätzlich weist die erste Schräge 15 der zuspannseitigen Brückenstrebe 3 eine erste Nase 16 auf. Eine zweite Nase 16a ist an der zweiten Schräge 15a der reaktionsseitigen Brückenstrebe 3a angeordnet. Die erste Nase 16 der ersten Schräge 15 der zuspannseitigen Brückenstrebe 3 ist, bezogen auf eine gedachte erste Ebene E, in Richtung der Bremsträgerunterseite 14 angeordnet. Die zweite Nase 16a der zweiten Schräge 15a der reaktionsseitigen Brückenstrebe 3a ist, bezogen auf eine gedachte zweite Ebene E2, auch in Richtung der Bremsträgerunterseite 14 angeordnet. Die Nasen 16, 16a stellen eine zusätzliche Begrenzung dar, sodass Ablagerungen, welche von außen in den Innenraum 19 des Bremsträgers 1 eindringen könnten, an den Nasen 16, 16a abprallen und entlang der Schrägen 15, 15a von der Bremsscheibe 6 weg geleitet werden.

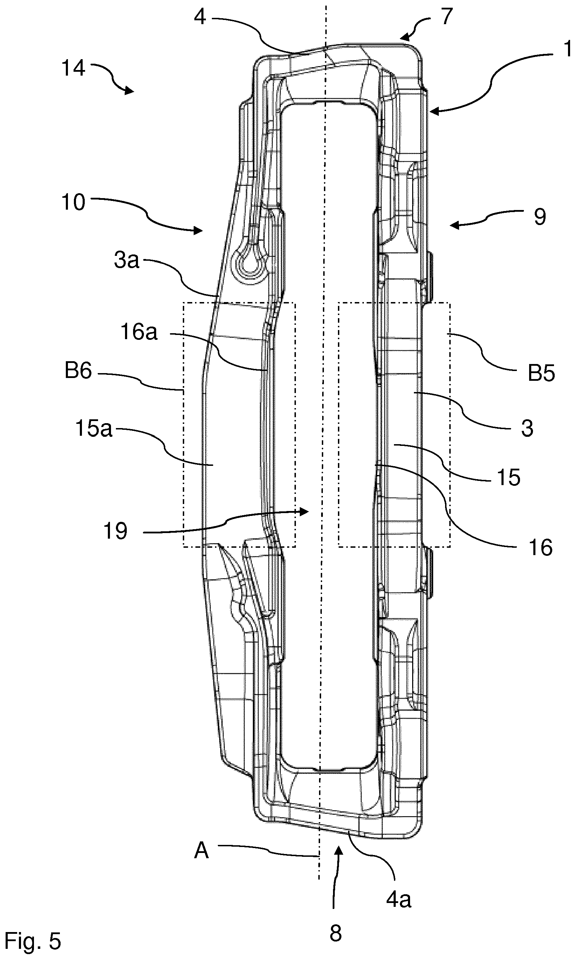

Fig. 5 zeigt den Bremsträger 1 nach Fig. 4 von der der Bremsträgerunterseite 14. Insbesondere sind die durchgängige Anordnung der ersten Nase 16 der ersten Schräge 15 der zuspannseitigen Brückenstrebe und die durchgängige Anordnung der zweiten Nase 16a der zweiten Schräge 15a der reaktionsseitigen Brückenstrebe 3a parallel in Richtung der Bremsträgerachse A sichtbar. Die erste Nase 16 der ersten Schräge 15 der zuspannseitigen Brückenstrebe 3 erstreckt sich von dem dritten Bremsträgerhorn 12b bis zu dem vierten Bremsträgerhorn 12c (Fig.2a). Die zweite Nase 16a der zweiten Schräge 15a der reaktionsseitigen Brückenstrebe 3a erstreckt von dem ersten Bremsträgerhorn 12 bis zu dem zweiten Bremsträgerhorn 12a (Fig.2a). Zur Verdeutlichung ist der Bereich der ersten Nase 16 der ersten Schräge 15 der zuspannseitigen Brückenstrebe 3 durch einen gedachten Bereich B5 und die zweite Nase 16a der zweiten Schräge 15a der reaktionsseitigen Brückenstrebe durch einen gedachten Bereich B6 gezeigt.

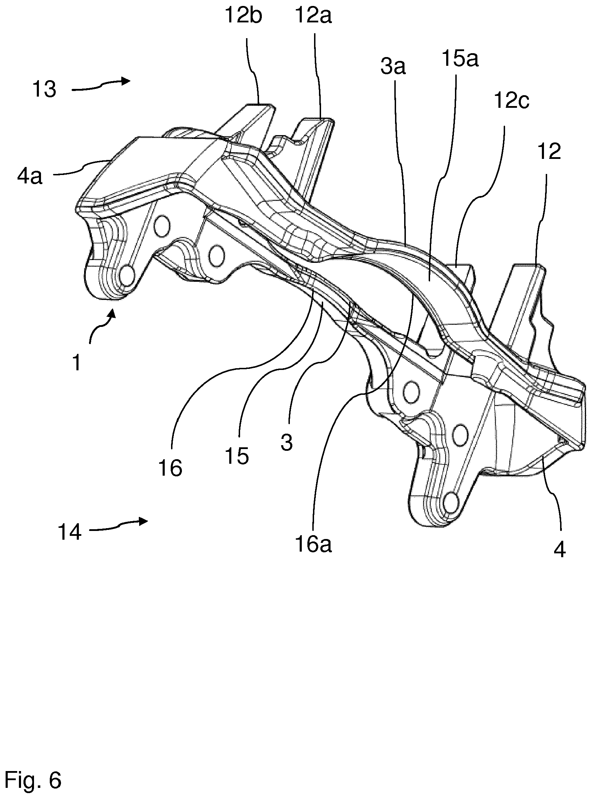

Fig. 6 zeigt den Bremsträger 1 nach Fig. 4 in einer seitlich gedrehten Perspektive. Insbesondere ist hier die durchgehende angeordnete erste Nase 16 der ersten Schräge 15 der zuspannseitigen Brückenstrebe 3 sichtbar, die sich von dem dritten Bremsträgerhorn 12b bis zu dem vierten Bremsträgerhorn 12c erstreckt. Weiterhin ist die durchgehende angeordnete zweite Nase 16a der zweiten Schräge 15a der reaktionsseitigen Brückenstrebe 3a sichtbar, die sich von dem ersten Bremsträgerhorn 12 bis zu dem zweiten Bremsträgerhorn 12a erstreckt.

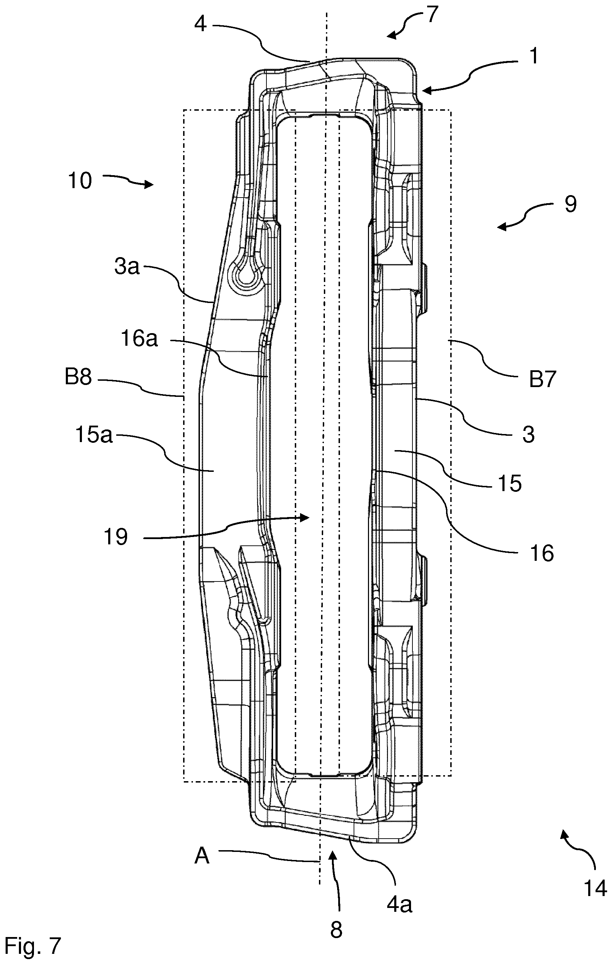

Fig. 7 zeigt den Bereich der Schrägen 15, 15a des Bremsträgers 1 nach Fig. 6 von der Bremsträgerunterseite 14. In Fig. 7 ist die erste Nase 16 der ersten Schräge 15 der zuspannseitigen Brückenstrebe 3 und die zweite Nase 16a der zweiten Schräge 15a der reaktionsseitigen Brückenstrebe 3a zwischen dem ersten Verbindungssteg 4 und dem zweiten Verbindungssteg 4a durchgängig und ohne Unterbrechung angeordnet. Zur Verdeutlichung ist der Bereich der ersten Nase 16 der ersten Schräge 15 der zuspannseitigen Brückenstrebe 3 durch einen gedachten Bereich B7 und die der Nase 16a der zweiten Schräge 15a der reaktionsseitigen Brückenstrebe 3a durch einen gedachten Bereich B8 gezeigt.

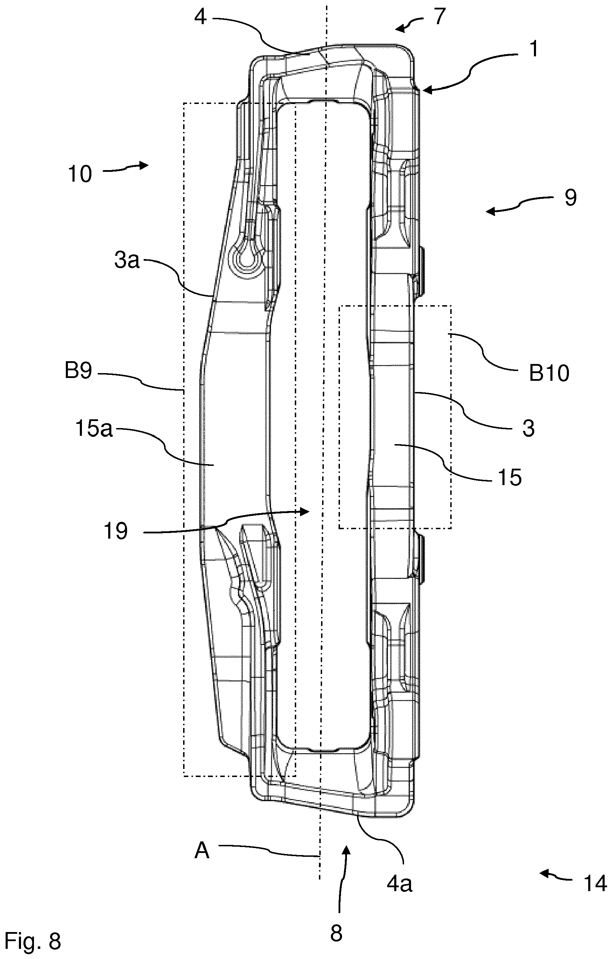

Ein weiteres Ausführungsbeispiel des Bremsträgers 1 nach Fig. 6 zeigt Fig. 8. In Fig. 8 ist die zweite Schräge 15a der reaktionsseitigen Brückenstrebe 3a von einem ersten Verbindungssteg 4 des Bremsträgers 1 bis zu einem zweiten Verbindungssteg 4a des Bremsträgers 1 durchgängig angeordnet. Zudem ist die zuspannseitige Brückenstrebe 3 von einem dritten Bremsträgerhorn 12b bis zu einem vierten Bremsträgerhorn 12c durchgängig angeordnet. Ein gedachter Bereich B9 markiert die zweite Schräge 15a der reaktionsseitigen Brückenstrebe 3a. Die erste Schräge 15 der zuspannseitigen Brückenstrebe 3 ist durch einen gedachten Bereich B10 verdeutlicht.

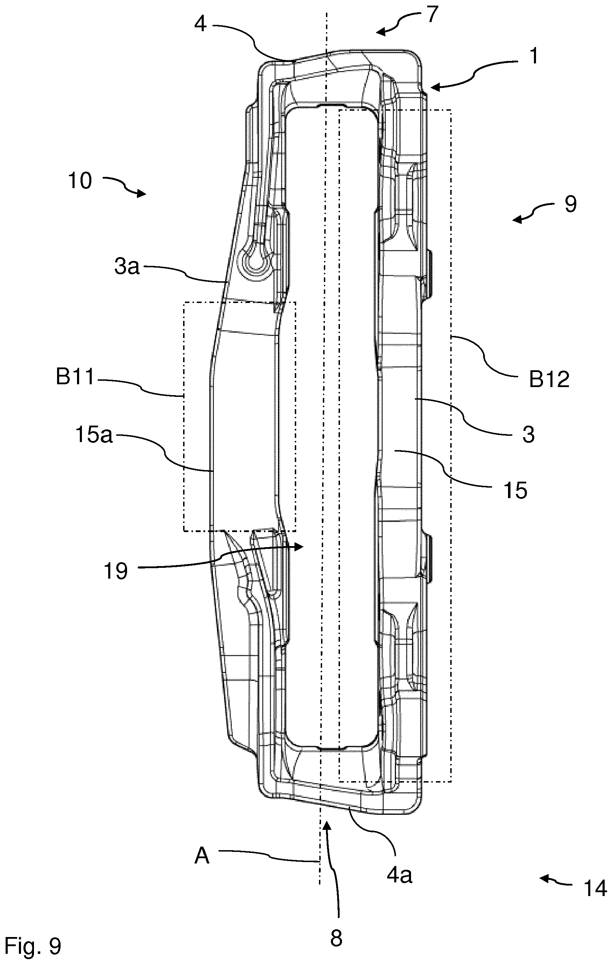

Fig. 9 zeigt dagegen einen Bremsträger 1 nach Fig. 6, wobei die erste Schräge 15 der zuspannseitigen Brückenstrebe 3 von einem ersten Verbindungssteg 4 des Bremsträgers 1 bis zu einem zweiten Verbindungssteg 4a des Bremsträgers 1 durchgängig angeordnet ist und die zweite Schräge 15a der reaktionsseitige Brückenstrebe 3a von einem ersten Bremsträgerhorn 12 bis zu einem zweiten Bremsträgerhorn 12a durchgängig angeordnet ist. Ein gedachter Bereich B11 verdeutlicht die zweite Schräge 15a der reaktionsseitige Brückenstrebe 3a. Die erste Schräge 15 der zuspannseitigen Brückenstrebe 3 ist durch einen gedachten Bereich B12 verdeutlicht.

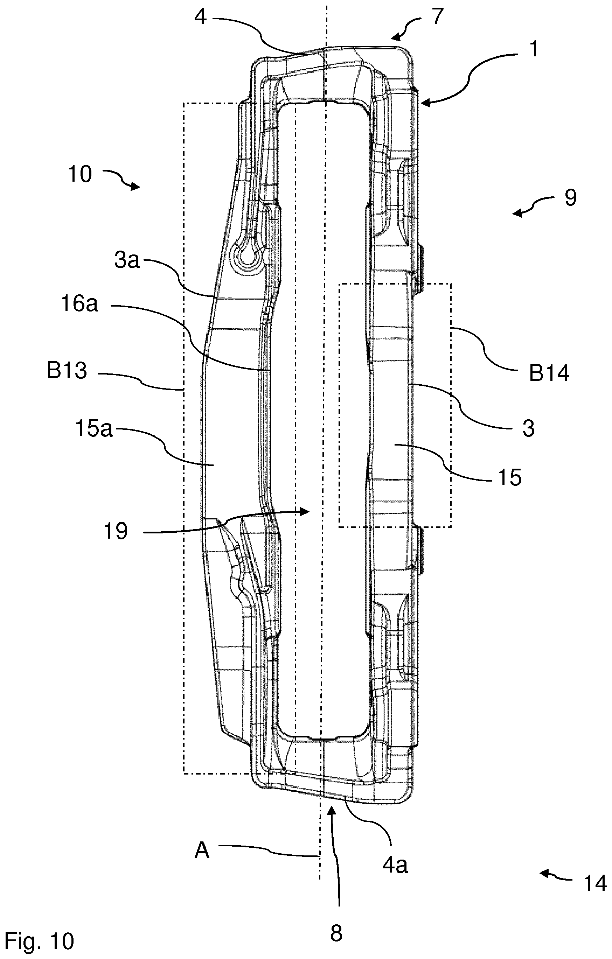

Fig. 10 zeigt eine weitere Ausgestaltung des Bremsträgers 1 nach Fig. 6. Gemäß Fig. 10 weist die zuspannseitige Brückenstrebe 3 des Bremsträgers 1 eine erste Schräge 15 und die reaktionsseitigen Brückenstrebe 3a des Bremsträgers 1 eine zweite Schräge 15a auf. Zusätzlich ist an der reaktionsseitigen Brückenstrebe 3a eine zweite Nase 16a angeordnet. Ein gedachter Bereich B13 verdeutlicht die Anordnung der zweiten Schräge 15a der reaktionsseitigen Brückenstrebe 3a. Die zweite Schräge 15a und die zweite Nase 16a der reaktionsseitigen Brückenstrebe 3a sind von einem ersten Verbindungssteg 4 des Bremsträgers 1 bis zu einem zweiten Verbindungssteg 4a des Bremsträgers 1 durchgängig angeordnet. Die erste Schräge 15 der zuspannseitigen Brückenstrebe 3 ist von einem dritten Bremsträgerhorn 12b des Bremsträgers 1 bis zu einem vierten Bremsträgerhorn 12c des Bremsträgers 1 durchgängig angeordnet. Die erste Schräge 15 der zuspannseitigen Brückenstrebe 3 ist durch einen gedachten Bereich B14 verdeutlicht.

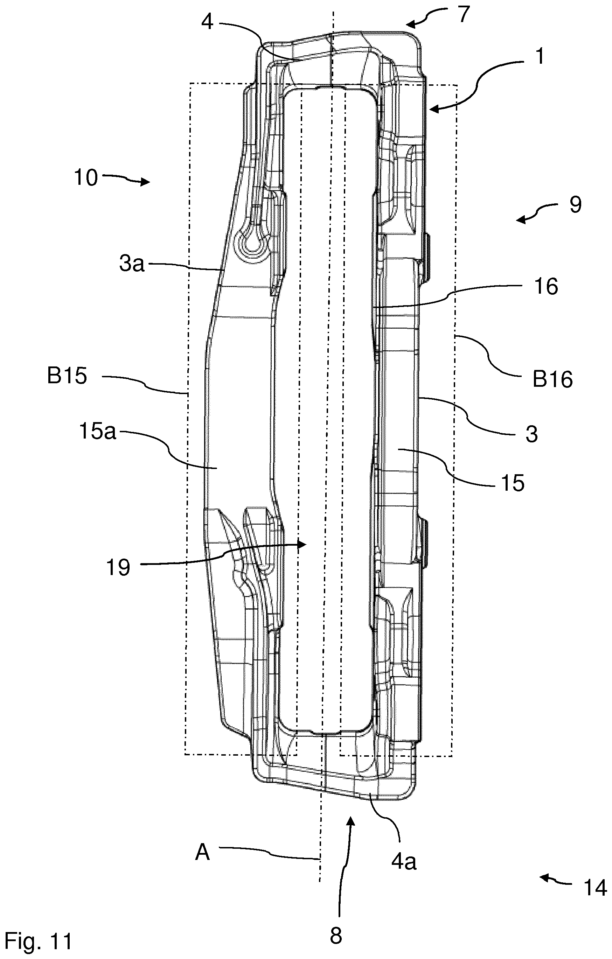

Fig. 11 zeigt einen Bremsträger 1 nach Fig. 6, bei dem die zuspannseitige Brückenstrebe 3 eine erste Schräge 15 aufweist und die reaktionsseitige Brückenstrebe 3a eine zweite Schräge 15a aufweist. Weiterhin ist an der zuspannseitigen Brückenstrebe 3 eine erste Nase 16 angeordnet. Sowohl die erste Schräge 15 der zuspannseitigen Brückenstrebe 3 mit der ersten Nase 16, als auch die zweite Schräge 15a der reaktionsseitigen Brückenstrebe 3a sind von einem ersten Verbindungssteg 4 des Bremsträgers 1 bis zu einem zweiten Verbindungssteg 4a des Bremsträgers 1 durchgängig angeordnet. Ein gedachter Bereich B15 verdeutlicht die zweite Schräge 15a der reaktionsseitigen Brückenstrebe 3a. Die erste Schräge 15 der zuspannseitigen Brückenstrebe 3 mit der ersten Nase 16 ist durch einen gedachten Bereich B16 verdeutlicht. Der gedachte Bereich B15 zeigt die zweite Schräge 15a der reaktionsseitigen Brückenstrebe 3a.

### Bezugszeichenliste als Teil der Beschreibung

- 1: Bremsträger
- 2: Scheibenbremse
- 3: zuspannseitige Brückenstrebe
- 3a: reaktionsseitige Brückenstrebe
- 4: erster Verbindungssteg
- 4a: zweiter Verbindungssteg
- 6: Bremsscheibe
- 7: erstes Ende des Bremsträgers 1
- 8: zweites Ende des Bremsträgers 1
- 9: Zuspannseite
- 10: Reaktionsseite
- 12: erstes Bremsträgerhorn
- 12a: zweites Bremsträgerhorn
- 12b: drittes Bremsträgerhorn
- 12c: viertes Bremsträgerhorn
- 13: Bremsbelagaufnahmeseite
- 14: Bremsträgerunterseite
- 15: erste Schräge der zuspannseitigen Brückenstrebe 3
- 15a: zweite Schräge der reaktionsseitigen Brückenstrebe 3a
- 16: erste Nase der ersten Schräge 15
- 16a: zweite Nase der zweiten Schräge 15a
- 17: Gleitsattel
- 18, 18a: Schiebebolzen
- 19: Innenraum des Bremsträgers 1
- 20, 20a: Bremsbeläge
- A: Bremsträgerachse
- B - B16: gedachte Bereiche der Schrägen 15, 15a
- E, E2: Ebenen des Bremsträgers 1
- α, β: Winkel

## Patentansprüche

1. Bremsträger (1) für eine Scheibenbremse (2) mit einer Bremsscheibe (6), wobei der Bremsträger (1) eine zuspannseitige Brückenstrebe (3) an einer Zuspannseite (9) der Scheibenbremse (2) und eine parallel, bezogen auf eine Bremsträgerachse (A), angeordnete reaktionsseitige Brückenstrebe (3a) auf einer Reaktionsseite (10) der Scheibenbremse (2) aufweist, wobei die zuspannseitige Brückenstrebe (3) und die reaktionsseitige Brückenstrebe (3a) an einem ersten Ende (7) des Bremsträgers (1) über einen ersten Verbindungssteg (4) miteinander verbunden sind und die zuspannseitige Brückenstrebe (3) und die reaktionsseitige Brückenstrebe (3a) an einem zweiten Ende (8) des Bremsträgers (1) über einen zweiten Verbindungssteg (4a) miteinander verbunden sind und der Bremsträger (1) eine mit Bremsträgerhörnern (12, 12a, 12b, 12c) versehene Bremsbelagaufnahmeseite (13) und eine der Bremsbelagaufnahmeseite (13) gegenüberliegende Bremsträgerunterseite (14) aufweist, **dadurch gekennzeichnet, dass** die zuspannseitige Brückenstrebe (3) eine erste Schräge (15) an der Bremsträgerunterseite (14) des Bremsträgers (1) aufweist und die erste erste Schräge (15) der zuspannseitigen Brückenstrebe (3) 8-:-. ausgehend von dem dritten Bremsträgerhorn (12b) bis zu dem vierten Bremsträgerhorn (12c), durchgängig angeordnet ist und die reaktionsseitige Brückenstrebe (3a) eine zweite Schräge (15a) an der Bremsträgerunterseite (14) des Bremsträgers (1) aufweist und die zweite Schräge (15a) der reaktionsseitigen Brückenstrebe (3a), ausgehend von dem ersten Bremsträgerhorn (12) bis zu dem zweiten Bremsträgerhorn (12a), durchgängig angeordnet ist.

2. Bremsträger (1) für eine Scheibenbremse (2) nach Anspruch 1, **dadurch gekennzeichnet, dass** die Neigung der ersten Schräge (15) der zuspannseitigen Brückenstrebe (3) und die Neigung der zweiten Schräge (15a) der reaktionsseitigen Brückenstrebe (3a), bezogen in Richtung der Bremsbelag (20, 20a) abgewandten Seite (14) der Bremsscheibe, (6) steigend ist.

3. Bremsträger (1) für eine Scheibenbremse (2) nach Anspruch 1 oder 2, **dadurch gekennzeichnet, dass** der Bremsträger (1) eine gedachte erste Ebene (E) und eine gedachte zweite Ebene (E2) aufweist und die erste Schräge (15) der zuspannseitigen Brückenstrebe (3), bezogen auf die erste Ebene (E), in einem Winkel (α) gekippt ist und die zweite Schräge (15a) der reaktionsseitigen Brückenstrebe (3a), bezogen auf die zweite Ebene (E2), in einem Winkel (β) gekippt ist.

4. Bremsträger (1) für eine Scheibenbremse (2) nach einem der vorangegangenen Ansprüche, **dadurch gekennzeichnet, dass** die erste Schräge (15) der zuspannseitigen Brückenstrebe (3) in einem Winkel (α) zwischen 1,5° und 15°, oder bevorzugt in einem Winkel (α) von 5° gekippt ist und die zweite Schräge (15a) der reaktionsseitigen Brückenstrebe (3a) in einem Winkel (β) zwischen 1,5° und 10°, oder bevorzugt in einem Winkel (β) von 3° gekippt ist.

5. Bremsträger (1) für eine Scheibenbremse (2) nach einem der vorangegangenen Ansprüche, **dadurch gekennzeichnet, dass** die erste Schräge (15) der zuspannseitigen Brückenstrebe (3) parallel der Bremsträgerachse (A) eine erste Nase (16) und/oder die zweite Schräge (15a) der reaktionsseitigen Brückenstrebe (3a) parallel der Bremsträgerachse (A) eine zweite Nase (16a) aufweist.

6. Bremsträger (1) für eine Scheibenbremse (2) nach Anspruch 5, **dadurch gekennzeichnet, dass** die erste Nase (16) der zuspannseitigen Brückenstrebe (3) einstückig mit dem Bremsträger (1) ausgebildet ist und die zweite Nase (16a) der reaktionsseitigen Brückenstrebe (3a) einstückig mit dem Bremsträger (1) ausgebildet ist.

7. Bremsträger (1) für eine Scheibenbremse (2) nach einem der vorangegangenen Ansprüche, **dadurch gekennzeichnet, dass** die erste Schräge (15) der zuspannseitigen Brückenstrebe (3) und die zweite Schräge (15a) der reaktionsseitigen Brückenstrebe (3a) zwischen dem ersten Verbindungssteg (4) und dem zweiten Verbindungssteg (4a) durchgängig angeordnet sind.

8. Bremsträger (1) für eine Scheibenbremse (2) nach einem der vorangegangenen Ansprüche, **dadurch gekennzeichnet, dass** die erste Schräge (15) der zuspannseitigen Brückenstrebe (3), ausgehend von dem dritten Bremsträgerhorn (12b) bis zu dem vierten Bremsträgerhorn (12c), durchgängig angeordnet ist und die zweite Schräge (15a) der reaktionsseitigen Brückenstrebe (3a) zwischen dem ersten Verbindungssteg (4) und dem zweiten Verbindungssteg (4a) durchgängig angeordnet ist.

9. Bremsträger (1) für eine Scheibenbremse (2) nach einem der vorangegangenen Ansprüche, **dadurch gekennzeichnet, dass** die erste Schräge (15) der zuspannseitigen Brückenstrebe (3) zwischen dem ersten Verbindungssteg (4) und dem zweiten Verbindungssteg (4a) durchgängig angeordnet ist und die zweite Schräge (15a) der reaktionsseitigen Brückenstrebe (3a), ausgehend von dem ersten Bremsträgerhorn (12) bis zu dem zweiten Bremsträgerhorn (12a), durchgängig angeordnet ist.

## Claims

1. Brake carrier (1) for a disk brake (2) with a brake disk (6), wherein the brake carrier (1) has a clamping-side bridge strut (3) on a clamping side (9) of the disk brake (2) and a reaction-side bridge strut (3a) on a reaction side (10) of the disk brake (2) arranged parallel to a brake carrier axis (A), wherein the clamping-side bridge strut (3) and the reaction-side bridge strut (3a) are connected together via a first connecting web (4) at a first end (7) of the brake carrier (1), and the clamping-side bridge strut (3) and the reaction-side bridge strut (3a) are connected together via a second connecting web (4a) at a second end (8) of the brake carrier (1), and the brake carrier (1) comprises a brake pad receiving side (13) provided with brake carrier horns (12, 12a, 12b, 12c) and a brake carrier underside (14) opposite the brake pad receiving side (13), **characterized in that** the clamping-side bridge strut (3) has a first chamfer (15) on the brake carrier underside (14) of the brake carrier (1) and the first chamfer (15) of the clamping-side bridge strut (3) is arranged so as to be continuous starting from the third brake carrier horn (12b) to the fourth brake carrier horn (12c), and the reaction-side bridge strut (3a) has a second chamfer (15a) on the brake carrier underside (14) of the brake carrier (1) and the second chamfer (15a) of the reaction-side bridge strut (3a) is arranged so as to be continuous starting from the first brake carrier horn (12) to the second brake carrier horn (12a).

2. Brake carrier (1) for a disk brake (2) according to Claim 1, **characterized in that** the slope of the first chamfer (15) of the clamping-side bridge strut (3) and the slope of the second chamfer (15a) of the reaction-side bridge strut (3a) rise relative to the direction of the side (14) of the brake disk (6) facing away from the brake pad (20, 20a).

3. Brake carrier (1) for a disk brake (2) according to Claim 1 or 2, **characterized in that** the brake carrier (1) has a theoretical first plane (E) and a theoretical second plane (E2), and the first chamfer (15) of the clamping-side bridge strut (3) is tilted by an angle (α) relative to the first plane (E), and the second chamfer (15a) of the reaction-side bridge strut (3a) is tilted by an angle (β) relative to the second plane (E2).

4. Brake carrier (1) for a disk brake (2) according to any of the preceding claims, **characterized in that** the first chamfer (15) of the clamping-side bridge strut (3) is tilted at an angle (α) between 1.5° and 15°, or preferably at an angle (α) of 5°, and the second chamfer (15a) of the reaction-side bridge strut (3a) is tilted at an angle (β) between 1.5° and 10°, or preferably at an angle (β) of 3°.

5. Brake carrier (1) for a disk brake (2) according to any of the preceding claims, **characterized in that** the first chamfer (15) of the clamping-side bridge strut (3) has a first lug (16) parallel to the brake carrier axis (A), and/or the second chamfer (15a) of the reaction-side bridge strut (3a) has a second lug (16a) parallel to the brake carrier axis (A).

6. Brake carrier (1) for a disk brake (2) according to Claim 5, **characterized in that** the first lug (16) of the clamping-side bridge strut (3) is formed integrally with the brake carrier (1), and the second lug (16a) of the reaction-side bridge strut (3a) is formed integrally with the brake carrier (1).

7. Brake carrier (1) for a disk brake (2) according to any of the preceding claims, **characterized in that** the first chamfer (15) of the clamping-side bridge strut (3) and the second chamfer (15a) of the reaction-side bridge strut (3a) are arranged so as to be continuous between the first connecting web (4) and the second connecting web (4a).

8. Brake carrier (1) for a disk brake (2) according to any of the preceding claims, **characterized in that** the first chamfer (15) of the clamping-side bridge strut (3) is arranged so as to be continuous starting from the third brake carrier horn (12b) to the fourth brake carrier horn (12c), and the second chamfer (15a) of the reaction-side bridge strut (3a) is arranged so as to be continuous between the first connecting web (4) and the second connecting web (4a) .

9. Brake carrier (1) for a disk brake (2) according to any of the preceding claims, **characterized in that** the first chamfer (15) of the clamping-side bridge strut (3) is arranged so as to be continuous between the first connecting web (4) and the second connecting web (4a), and the second chamfer (15a) of the reaction-side bridge strut (3a) is arranged so as to be continuous starting from the first brake carrier horn (12) to the second brake carrier horn (12a) .

## Revendications

1. Support de frein (1) pour un frein à disque (2) doté d'un disque à frein (6), le support de frein (1) présentant une entretoise de pont côté application du frein (3) sur une face d'application du frein (9) du frein à disque (2) et une entretoise de pont côté réaction (3a) disposée en parallèle, par rapport à un axe de support de frein (A), sur une face de réaction (10) du frein à disque (2), dans lequel l'entretoise de pont côté application du frein (3) et l'entretoise de pont côté réaction (3a) sont reliées l'une à l'autre au niveau d'une première extrémité (7) du support de frein (1) par l'intermédiaire d'une première nervure de liaison (4), et l'entretoise de pont côté application du frein (3) et l'entretoise de pont côté réaction (3a) sont reliées l'une à l'autre au niveau d'une deuxième extrémité (8) du support de frein (1) par l'intermédiaire d'une deuxième nervure de liaison (4a), et le support de frein (1) présente une face de réception de garniture de frein (13) dotée de cornes de support de frein (12, 12a, 12b, 12c) et une face inférieure de support de frein (14) opposée à la face de réception de garniture de frein (13), **caractérisé en ce que** l'entretoise de pont côté application du frein (3) présente une première pente (15) sur la face inférieure de support de frein (14) du support de frein (1), et la première pente (15) de l'entretoise de pont côté application du frein (3) est disposée en continu en partant de la troisième corne de support de frein (12b) jusqu'à la quatrième corne de support de frein (12c), et l'entretoise de pont côté réaction (3a) présente une deuxième pente (15a) sur la face inférieure de support de frein (14) du support de frein (1), et la deuxième pente (15a) de l'entretoise de pont côté réaction (3a) est disposée en continu en partant de la première corne de support de frein (12) jusqu'à la deuxième corne de support de frein (12a).

2. Support de frein (1) pour un frein à disque (2) selon la revendication 1, **caractérisé en ce que** l'inclinaison de la première pente (15) de l'entretoise de pont côté application du frein (3) et l'inclinaison de la deuxième pente (15a) de l'entretoise de pont côté réaction (3a) augmentent par rapport au côté détourné (14) du disque à frein (6) en direction de la garniture de frein (20, 20a).

3. Support de frein (1) pour un frein à disque (2) selon la revendication 1 ou 2, **caractérisé en ce que** le support de frein (1) présente un premier plan imaginaire (E) et un deuxième plan imaginaire (E2), et la première pente (15) de l'entretoise de pont côté application du frein (3) est inclinée d'un angle (ex) par rapport au premier plan (E), et la deuxième pente (15a) de l'entretoise de pont côté réaction (3a) est inclinée d'un angle (β) par rapport au deuxième plan (E2) .

4. Support de frein (1) pour un frein à disque (2) selon l'une quelconque des revendications précédentes, **caractérisé en ce que** la première pente (15) de l'entretoise de pont côté application du frein (3) est inclinée d'un angle (α) compris entre 1,5° et 15°, ou de préférence d'un angle (α) de 5°, et la deuxième pente (15a) de l'entretoise de pont côté réaction (3a) est inclinée d'un angle (β) compris entre 1,5° et 10°, ou de préférence d'un angle (β) de 3°.

5. Support de frein (1) pour un frein à disque (2) selon l'une quelconque des revendications précédentes, **caractérisé en ce que** la première pente (15) de l'entretoise de pont côté application du frein (3) présente une première came (16) en parallèle à l'axe de support de frein (A), et/ou la deuxième pente (15a) de l'entretoise de pont côté réaction (3a) présente une deuxième came (16a) en parallèle à l'axe de support de frein (A).

6. Support de frein (1) pour un frein à disque (2) selon la revendication 5, **caractérisé en ce que** la première came (16) de l'entretoise de pont côté application du frein (3) est réalisée d'un seul tenant avec le support de frein (1), et la deuxième came (16a) de l'entretoise de pont côté réaction (3a) est réalisée d'un seul tenant avec le support de frein (1).

7. Support de frein (1) pour un frein à disque (2) selon l'une quelconque des revendications précédentes, **caractérisé en ce que** la première pente (15) de l'entretoise de pont côté application du frein (3) et la deuxième pente (15a) de l'entretoise de pont côté réaction (3a) sont disposées en continu entre la première nervure de liaison (4) et la deuxième nervure de liaison (4a).

8. Support de frein (1) pour un frein à disque (2) selon l'une quelconque des revendications précédentes, **caractérisé en ce que** la première pente (15) de l'entretoise de pont côté application du frein (3) est disposée en continu, en partant de la troisième corne de support de frein (12b) jusqu'à la quatrième corne de support de frein (12c), et la deuxième pente (15a) de l'entretoise de pont côté réaction (3a) est disposée en continu entre la première nervure de liaison (4) et la deuxième nervure de liaison (4a).

9. Support de frein (1) pour un frein à disque (2) selon l'une quelconque des revendications précédentes, **caractérisé en ce que** la première pente (15) de l'entretoise de pont côté application du frein (3) est disposée en continu entre la première nervure de liaison (4) et la deuxième nervure de liaison (4a), et la deuxième pente (15a) de l'entretoise de pont côté réaction (3a) est disposée en continu, en partant de la première corne de support de frein (12) jusqu'à la deuxième corne de support de frein (12a).
